# EUROPÄISCHE PATENTANMELDUNG

(11) **EP 4 609 687 A1**
(43) Veröffentlichungstag der Anmeldung: **03.09.2025**
(21) Anmeldenummer: 24160247.3
(22) Anmeldetag: 28.02.2024
(51) Int. Cl.: A01C 5/06, A01C 7/20

(54) **ANORDNUNG FÜR EINE SÄREIHE EINER LANDWIRTSCHAFTLICHEN SÄMASCHINE, SÄREIHE SOWIE LANDWIRTSCHAFTLICHE SÄMASCHINE**

(71) Anmelder: Kverneland Group Soest GmbH, 59494 Soest (DE)
(72) Erfinder: SCHUMACHER, Ferdinand, 59494 Soest (DE)
(74) Vertreter: Bittner, Thomas L.

(57) **Zusammenfassung**

Die Erfindung betrifft eine Anordnung für eine Säreihe einer landwirtschaftlichen Sämaschine sowie eine Säreihe und eine landwirtschaftliche Sämaschine. Die Anordnung ist gebildet mit einer Schneidscheibe (3; 4), welche an einer Scheibenhalteeinrichtung drehbar angeordnet und für eine Bodenbearbeitung zur Saatfurchenausbildung eingerichtet ist; und einem Tiefeneinstellrad (10; 11). Das Tiefeneinstellrad (10; 11) ist an einer Radhalteeinrichtung (12) auf einer Achseneinrichtung drehbar angeordnet; relativ zur Schneidscheibe (3; 4) verlagerbar, derart, dass hierdurch für die Schneidscheibe (3; 4) eine Bodenarbeitstiefe für die Bodenbearbeitung einstellbar ist; benachbart zur Schneidscheibe (3; 4) und in Fahrtrichtung dieser gegenüber zurückversetzt, derart, dass das Tiefeneinstellrad (10; 11) bei der Bodenbearbeitung Boden hinter der Schneidscheibe (3; 4) andrückend ausgebildet ist; und in einer Schubstellung angeordnet, derart, dass das Tiefeneinstellrad (10; 11) bei der Bodenbearbeitung mittels der Radhalteeinrichtung (12) in Fahrtrichtung geschoben wird. Die Radhalteeinrichtung (12) weist einen in Bezug auf einen Zwischenraum (25) zwischen der Schneidscheibe (3; 4) und dem Tiefeneinstellrad (10; 11) außenliegenden, das Tiefeneinstellrad (10; 11) haltenden Radhaltearm (13) auf, der mit einem auf einer von der Schneidscheibe (3; 4) abgewandten Seite des Tiefeneinstellrads (10; 11) verlaufenden ersten Haltearmabschnitt (19) gebildet ist, an welchem endseitig die Achseneinrichtung (24) angeordnet ist. (Fig. 1)

## Beschreibung

Die Erfindung betrifft eine Anordnung für eine Säreihe einer landwirtschaftlichen Sämaschine, eine Säreihe sowie eine landwirtschaftliche Sämaschine.

### Hintergrund

Landwirtschaftliche Sämaschinen dienen dazu, Saatkörner in den Boden einzubringen. Hierzu sind landwirtschaftliche Sämaschinen bekannt, die über eine Reihenanordnung von mehreren Säreihen verfügen, um so quer zur Fahrtrichtung eine gewünschte Arbeitsbreite der landwirtschaftlichen Sämaschine beim Einbringen des Saatkorns auszubilden. Mit Hilfe der Sähreihe wird bei der Bodenbearbeitung jeweils mindestens eine Saatfurche hergestellt, in welche die Saatkörner dann eingebracht werden. Zu diesem Zweck weist die Säreihe eine Schneidscheibe oder ein Schneidscheibenpaar auf, mit dem beim Bewegen der landwirtschaftlichen Sämaschine über den Boden die Saatfurche in gewünschter Tiefe ausgebildet wird, um dann in der Saatfurche das Saatkorn einzubringen.

Zum Einstellen einer Bodenarbeitstiefe der Schneidscheibe beim Ausbilden der Saatfurche ist der Schneidscheibe regelmäßig ein Tiefeneinstellrad zugeordnet, welches auch als Gauge-Wheel bezeichnet wird. Das Tiefeneinstellrad ist in seiner Lage relativ zur Schneidscheibe einstellbar, um unterschiedliche Bodenarbeitstiefen einzustellen.

Im Dokument US 2014 / 0238283 A1 ist eine Anordnung für eine Säreihe einer landwirtschaftlichen Sämaschine mit einem Schneidscheibenpaar sowie zugeordneten Tiefeneinstellrädern offenbart. Die Tiefeneinstellräder sind in Bezug auf das Schneidscheibenpaar auf gegenüberliegenden Seiten außenliegend und mit der jeweiligen Schneidscheibe flächig überlappend angeordnet. Die Tiefeneinstellräder werden jeweils mit Hilfe eines zugeordneten Radhaltearms in einer Zugstellung oder -anordnung gehalten, derart, dass die Tiefeneinstellräder bei der Bodenbearbeitung in Fahrtrichtung gezogen werden. Die Radhaltearme weisen jeweils einen in Bezug auf das Schneidscheibenpaar und das jeweilige Tiefeneinstellrad außenliegenden Haltearmabschnitt auf, welcher sich auf der Außenseite des Tiefeneinstellrads zu einer Achseneinrichtung hin erstreckt, welche der drehbaren Lagerung des Tiefeneinstellrads dient.

Dokument US 5,427,038 A betrifft eine Anordnung mit einem Schneidscheibenpaar und zugeordneten Tiefeneinstellrädern für eine Säreihe einer landwirtschaftlichen Sämaschine. Die Tiefeneinstellräder sind mit Hilfe eines jeweils zugeordneten und in Bezug auf das jeweilige Tiefeneinstellrad innenliegenden Radhaltearms in einer Schubstellung oder -anordnung angeordnet, derart, dass die Tiefeneinstellräder sowie die Schneidscheiben bei der Bodenbearbeitung zum Ausbilden der Saatfurche in Fahrtrichtung geschoben werden. In Fahrrichtung sind die Tiefeneinstellräder relativ zu den Schneidscheiben zurückversetzt.

### Zusammenfassung

Aufgabe der Erfindung ist es, eine Anordnung für eine Säreihe einer landwirtschaftlichen Maschine, eine Säreihe sowie eine landwirtschaftliche Maschine anzugeben, mit denen das Ausbringen eines Saatguts in eine Saatfurche bei der Bodenbearbeitung verbessert ist.

Zur Lösung sind eine Anordnung für eine Säreihe einer landwirtschaftlichen Maschine nach Anspruch 1 sowie eine Säreihe und eine landwirtschaftliche Sämaschine nach dem nebengeordneten Ansprüchen 14 und 15 geschaffen. Ausgestaltungen sind Gegenstand von abhängigen Unteransprüchen.

Nach einem Aspekt ist eine Anordnung für eine Säreihe einer landwirtschaftlichen Sämaschine geschaffen. Die Anordnung weist eine Schneidscheibe auf, welche an einer Scheibenhalteeinrichtung drehbar angeordnet und für eine Bodenbearbeitung zur Saatfurchenausbildung eingerichtet ist. Ein Tiefeneinstellrad ist an einer Radhalteeinrichtung auf einer Achseneinrichtung drehbar angeordnet und relativ zur Schneidscheibe verlagerbar, derart, dass hierdurch für die Schneidscheibe eine Bodenarbeitstiefe für die Bodenbearbeitung einstellbar ist. Das Tiefeneinstellrad ist benachbart zur Schneidscheibe und in Fahrtrichtung dieser gegenüber zurückversetzt angeordnet, derart, dass das Tiefeneinstellrad bei der Bodenbearbeitung Boden hinter der Schneidscheibe andrückend ausgebildet ist. Weiterhin ist das Tiefeneinstellrad in einer Schub- oder Schiebestellung angeordnet, derart, dass das Tiefeneinstellrad bei der Bodenbearbeitung mittels der Radhalteeinrichtung in Fahrtrichtung geschoben wird. Die Radhalteeinrichtung weist einen in Bezug auf einen Zwischenraum zwischen der Schneidscheibe und dem Tiefeneinstellrad außenliegenden, das Tiefeneinstellrad haltenden Radhaltearm auf, der mit einem auf einer von der Schneidscheibe abgewandten Seite des Tiefeneinstellrads verlaufenden ersten Haltearmabschnitt gebildet ist, an welchem endseitig die Achseneinrichtung angeordnet ist.

Nach weiteren Aspekten sind eine Säreihe mit der Anordnung sowie eine Sämaschine mit der Säreihe geschaffen.

Mit der vorgeschlagenen Technologie wird bei der Kombination von mindestens einer Schneidscheibe und mindestens einem Tiefeneinstellrad eine multifunktionale Wirkung des Tiefeneinstellrad bei der Verwendung in der Säreihe einer landwirtschaftlichen Sämaschine unterstützt und verbessert, also nicht nur deren Aufgabe hinsichtlich der Einstellung der Bodenarbeitstiefe für die Schneidscheibe. So unterstützt das Tiefeneinstellrad gleichzeitig Boden anzudrücken, nachdem das Saatkorn in der Saatfurche abgelegt wurde. Hierzu ist das Tiefeneinstellrad in Bezug auf die zugeordnete Schneidscheibe in Fahrtrichtung zurückversetzt. Die vorgesehene Ausbildung der Radhalteeinrichtung mit dem Radhaltearm, dessen erster Haltearmabschnitt in Bezug auf den Zwischenraum zwischen Schneidscheibe und Tiefeneinstellrad außenliegend angeordnet ist, unterstützt in der Schubstellung oder -anordnung des Tiefeneinstellrads eine auf das Tiefeneinstellrad wirkende Kraftresultierende in Richtung zur Schneidscheibe hin. Auf diese Weise wird der Abstand im Zwischenraum zwischen Schneidscheibe und zugeordnetem Tiefeneinstellrad minimiert, wodurch Anhaftungen des Bodens an der Schneidscheibe bei der Bodenbearbeitung effizienter vom Tiefeneinstellrad abgestreift werden. Auch kann das Tiefeneinstellrad hierdurch seine in Bezug auf die Saatfurche mit dem Saatkorn andrückende Wirkung verbessert entfalten.

Der Radhaltearm kann einen zweiten Haltearmabschnitt aufweisen, der das Tiefeneinstellrad einer Lauffläche des Tiefeneinstellrads gegenüberliegend zumindest abschnittweise übergreift und an den der erste Haltearmabschnitt in einer abgewinkelten Stellung angeformt ist. Der zweite Haltearmabschnitt kann sich mit Blick auf die Lauffläche des Tiefeneinstellrads von der Innenseite zur Außenseite und so das Tiefeneinstellrad im Wesentlichen vollständig übergreifend erstrecken. Zwischen dem ersten und dem zweiten Haltearmabschnitt ist zum Beispiel ein Winkel von ≤ 90 Grad ausgebildet, insbesondere ein Winkel von etwa 90 Grad bis etwa 80 Grad. Ist der zwischen dem ersten und dem zweiten Haltearmabschnitt ausgebildete Winkel geringer als 90 Grad, kann der erste Haltearmabschnitt in Bezug zur Fahrtrichtung bei der Bodenbearbeitung insgesamt nach innen zur Schneidscheibe hin geneigt sein, was eine Kraftresultierende weiter unterstützt, die das Tiefeneinstellrad zur Schneidscheibe hin drückt.

Der zweite Haltearmabschnitt kann an dem ersten Haltearmabschnitt einstückig angeformt sein. Eine einstückige Ausbildung von erstem und zweitem Haltearmabschnitt kann beispielsweise mit Hilfe einer geschweißten Verbindung zwischen den Haltearmabschnitten oder mittels Verwendung eines Gußbauteils für die Haltearmabschnitte ausgebildet sein.

Der Radhaltearm kann aufgrund einer bei der Bodenbearbeitung auf den Radhaltearm wirkenden Kraftresultierenden nach innen zur Schneidscheibe hin schwenkend flexibel verlagerbar sein. Die flexible Verlagerbarkeit des Radhaltearms und somit des Tiefeneinstellrads nach Innen zur Schneidscheibe hin unterstützt insbesondere die Bodenanhaftungen abstreifende Wirkung des Tiefeneinstellrads in Bezug auf die Außenseite der Schneidscheibe.

Der erste und der zweite Haltearmabschnitt können aufgrund der bei der Bodenbearbeitung auf den Radhaltearm wirkenden Kraftresultierenden die abgewinkelte Stellung flexibel ändernd ausgeführt sein. Hierbei kann der zwischen dem ersten und dem zweiten Haltearmabschnitt ausgebildete Winkel zum Beispiel verkleinert werden. Die flexible Änderung der abgewinkelten Stellung kann derart ausgebildet sein, dass sich allein der erste Haltearmabschnitt flexibel verlagert, wohingegen der zweite Haltearmabschnitt im Wesentlichen lagestabil verbleibt.

Der Radhaltearm kann mittels einer Schwenkhalterung an einem Rahmenbauteil angeordnet sein, mit der eine Schwenkachse bereitgestellt ist, um welche der Radhaltearm mit dem hieran angeordneten Tiefeneinstellrad zum Einstellen der Bodenarbeitstiefe schwenkbar ist. Das Rahmenbauteil kann Teil eines Rahmengestells der Säreihe oder mit diesem verbunden sein und beispielsweise als Hebelarm ausgeführt sein. Die Schwenkbarkeit des Radhaltearms um die Schwenkachse ermöglicht das Verstellen der Relativlage des Tiefeneinstellrads zur Schneidscheibe, insbesondere betreffend die Relativlage der jeweiligen Drehachsen von Schneidscheibe und Tiefeneinstellrad, um so beim Ausbilden der Saatfurche ein unterschiedliches Eindringen der Schneidscheibe in den Boden einzustellen.

Das Rahmenbauteil kann sich zumindest abschnittsweise oberhalb der Anordnung von Schneidscheibe und Tiefeneinstellrad erstrecken.

Dem Radhaltearm kann eine Einstelleinrichtung zugeordnet sein, welche mit einem am Radhaltearm angeformten Hebelarm verbunden ist, derart, dass der Radhaltearm mittels Betätigen der Einstelleinrichtung um die Schwenkachse schwenkbar ist. Es kann eine manuelle, hydraulische und / oder elektrische Einstelleinrichtung vorgesehen sein. Bei einer manuellen Einstelleinrichtung kann zum Beispiel ein Drehverstellhebel vorgesehen sein, welcher vom Nutzer betätigbar ist. Eine hydraulische Einstelleinrichtung kann mit einem Hydraulikzylinder ausgeführt sein, welcher dazu dient, den Radhaltearm um die Schwenkachse zu schwenken.

Der erste Haltearmabschnitt kann zum Ausbilden der Schubstellung oder -anordnung für das Tiefeneinstellrad in Bezug auf eine horizontale Bodenoberfläche in einer Spitzwinkel-Stellung angeordnet sein, derart, dass zwischen einer Längsrichtung des ersten Haltearmabschnitts und der horizontalen Bodenoberfläche ein spitzer Winkel ausgebildet ist.

Der Winkel zwischen erstem Haltearmabschnitt und horizontaler Bodenoberfläche kann sich im Betrieb aufgrund einer Schwenkbarkeit der Radhalteeinrichtung ändern, insbesondere aufgrund unterschiedlicher Sätiefe (Bodenarbeitstiefe der Schneidscheibe(n)).

Der Radhaltearm kann mit voneinander beabstandeten Teilarmen gebildet sein, die endseitig zur Achseneinrichtung hin zusammenlaufen. Bei dieser oder anderen Ausgestaltungen können der erste und / oder der zweite Haltearmabschnitt als gerade (im Wesentlichen nicht gekrümmte) Arme ausgebildet sein. Weist der Radhaltearm die voneinander beabstandete Teilarme auf, können mindestens einer der Teilarme oder alle Teilarme als gerade verlaufende Armabschnitte ausgebildet sein. Die endseitig zur Achseneinrichtung hin zusammenlaufende Teilarme können einer V-Form entsprechend angeordnet sein.

Die Teilarme können im Bereich des zweiten Haltearmabschnitts einer Parallelstellung entsprechend angeordnet sein und dann beginnend in einem Übergang zwischen dem zweiten und dem ersten Haltearmabschnitt oder benachbart hierzu zur Achseneinrichtung hin zusammenlaufen. Bei dieser Ausgestaltung bleibt der Abstand zwischen den Teilarmen im Bereich des zweiten Haltearmabschnitts im Wesentlichen gleich und beginnt sich im Übergang zwischen dem zweiten und dem ersten Haltearmabschnitt oder benachbart hierzu zu verringern, also insbesondere in einem abgewinkelten Bereich, in welchem der Übergang zwischen dem ersten und dem zweiten Haltearmabschnitt ausgebildet ist.

Die Teilarme können auf gegenüberliegenden Seiten der Schwenkhalterung des Radhaltearms angeformt sein. Die Teilarme, die in verschiedenen Ausgestaltungen zum Beispiel mindestens zwei oder mehr Teilarme umfassen können, sind in einer Ausführungsform in Bezug auf die Schwenkachse auf gegenüberliegenden Seiten angeordnet, insbesondere gemäß einer symmetrischen Abstandsanordnung in Bezug auf die Schwenkachse. Die Teilarme können im Bereich der Schwenkhalterung oder benachbart hierzu einstückig angeformt sein. Hierbei kann eine einstückige Ausbildung mit dem Hebelarm vorgesehen sein, welcher mit der Einstelleinrichtung verbunden ist.

In einer Ausführungsform kann bei der Anordnung Folgendes vorgesehen sein: eine weitere Schneidscheibe, welche an einer weiteren Scheibenhalteeinrichtung drehbar angeordnet und mit der Schneidscheibe ein Schneidscheibenpaar für die Bodenbearbeitung zur Saatfurchenausbildung bildet, und ein weiteres Tiefeneinstellrad, welches der weiteren Schneidscheibe zugeordnet und dem Tiefenrad entsprechend ausgebildet ist. Eine weitere Radhalteeinrichtung für das weitere Tiefeneinstellrad weist einen in Bezug auf einen Zwischenraum zwischen der weiteren Schneidscheibe und dem weiteren Tiefeneinstellrad außenliegenden, das weitere Tiefeneinstellrad haltenden weiteren Radhaltearm auf, der mit einem auf einer von der weiteren Schneidscheibe abgewandten Seite des weiteren Tiefeneinstellrads verlaufenden ersten Haltearmabschnitt gebildet ist, an welchem endseitig zur drehbaren Aufnahme des weiteren Tiefeneinstellrads eine weitere Achseneinrichtung angeordnet ist.

Bei dieser Ausgestaltung weist die Anordnung zwei Schneidscheiben auf, die ein Schneidscheibenpaar bilden. Die Schneidscheiben können mit Blick von oben auf das Schneidscheibenpaar einer v-förmigen Anordnung entsprechend gebildet sein, was eine effiziente Herstellung der Saatfurche unterstützt. Bei den Schneidscheiben ist jeweils das Tiefeneinstellrad zugeordnet, welches in Bezug auf die jeweilige Schneidscheibe außenliegend neben dieser angeordnet ist. Auch die Tiefeneinstellräder können eine V-Stellung mit Blick von oben auf die Anordnung der Tiefeneinstellräder aufweisen. In Fahrtrichtung ist das Tiefeneinstellrad gegenüber der jeweils zugeordneten Schneidscheibe zurückversetzt, wobei mit Blick von der Seite auf die Anordnung Schneidscheibe und Tiefeneinstellrad flächig teilweise überlappen.

Eine jeweilige Halteeinrichtungsbasis, von der ausgehend sich der Radhaltearm der Radhalteeinrichtung erstreckt, kann mit Blick von der Seite auf die Anordnung hinter dem Tiefeneinstellrad ausgebildet sein, was die jeweilige Schubstellung für das Tiefeneinstellrad unterstützt. Mit Hilfe der Halteeinrichtungsbasis ist der Radhaltearm an dem Rahmenbauteil schwenkbar montiert. Von der Halteeinrichtungsbasis aus kann sich der Hebelarm erstrecken, beispielsweise in im Wesentlichen vertikaler Richtung nach oben, welcher mit der Einstellreinrichtung verbindbar ist.

Im Zusammenhang mit der Säreihe und / oder der landwirtschaftlichen Maschine können die vorangehend in Verbindung mit der Anordnung erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit Schneidscheiben und Tiefeneinstellrädern für eine Säreihe einer landwirtschaftlichen Sämaschine von schräg vorn;
- Fig. 2: eine schematische Darstellung der Anordnung aus Fig. 1 von der Seite und
- Fig. 3: eine schematische Darstellung der Anordnung aus Fig. 1 von unten.

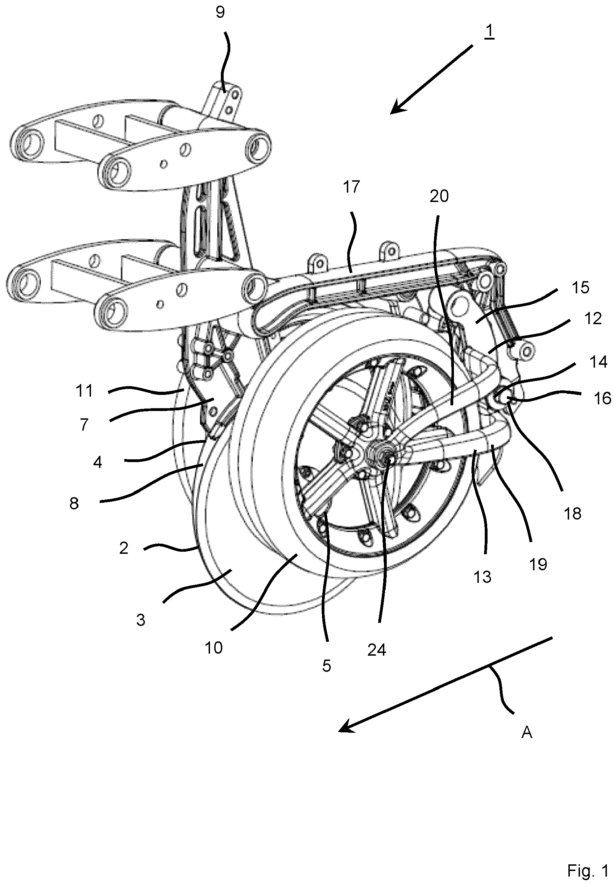

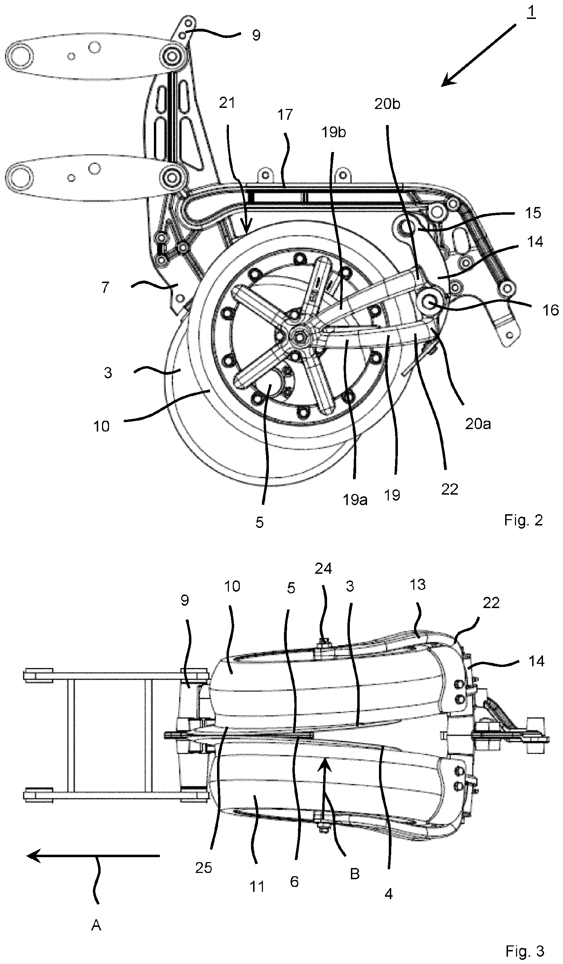

Fig. 1 bis 3 zeigen schematische Darstellungen einer Anordnung 1 für eine Säreihe einer landwirtschaftlichen Sämaschine. Mit Hilfe der Anordnung 1 wird beim Betrieb der landwirtschaftlichen Sämaschine eine Saatfurche ausgebildet, um hierin Saatkörner abzulegen. Zum Herstellen der Saatfurche weist die Anordnung 1 ein Schneidscheibenpaar 2 mit einer ersten und einer zweiten Schneidscheibe 3, 4 auf, welche gemäß Fig. 3 mit Blick von oben oder unten in einer V-Stellung angeordnet sind.

Die erste und die zweite Schneidscheibe 3, 4 sind mit Hilfe einer jeweils zugeordneten Scheibenhalteeinrichtung 5, 6 an einem Scheibenhaltearm 7 drehbar gelagert, welcher sich in einen Zwischenraum 8 zwischen der ersten und der zweiten Schneidscheibe 3, 4 hinein erstreckt (vgl. Fig. 1). Der Scheibenhaltearm 7 ist an einem Rahmengestell 9 der Säreihe aufgenommen, welches in den Fig. 1 bis 3 zur besseren Darstellbarkeit nur teilweise gezeigt ist.

Der ersten und der zweiten Schneidscheibe 3, 4 sind ein erstes und ein zweites Tiefeneinstellrad 10, 11 zugeordnet, derart, dass das jeweilige Tiefeneinstellrad 10, 11 in Bezug auf die zugeordnete Schneidscheibe 3, 4 außenliegend angeordnet ist. Das erste und das zweite Tiefeneinstellrad 10, 11, welche gemäß Fig. 3 relativ zueinander in einer V-Stellung angeordnet sind, sind in Bezug auf die zugeordnete Schneidscheibe 3, 4 mit Blick von der Seite (vgl. insbesondere Fig. 2) sowie in Bezug auf eine Fahrtrichtung gemäß Pfeil A bei der Bodenbearbeitung versetzt angeordnet, im gezeigten Beispiel zurück und nach schräg oben. Das Versetzen nach oben ermöglicht ein Eindringen der Schneidscheiben 3, 4 in den Boden bei der Bodenbearbeitung zur Saatfurchenausbildung. Das Zurückversetzen der Tiefeneinstellräder 10, 11 ermöglicht es, dass die Tiefeneinstellräder 10, 11 bei der Bodenbearbeitung hinter den Schneidscheiben 3, 4 Boden wieder andrücken, nachdem das Saatkorn in der Saatfurche abgelegt wurde.

Im Folgenden werden weitere Aspekte beschrieben, wobei im Wesentlichen auf das erste Tiefeneinstellrad 10 und die zugeordnete erste Schneidscheibe 3 Bezug genommen wird. Das zweite Tiefeneinstellrads 11 und die zugeordnete zweite Schneidscheibe 4 können entsprechend ausgebildet sein, insbesondere hinsichtlich einer Halteeinrichtung für das zweite Tiefeneinstellrad 11.

Das erste Tiefeneinstellrad 10 wird mit Hilfe einer Halteeinrichtung 12 in der gezeigten Stellung gehalten, insbesondere in seiner Relativlage zur ersten Schneidscheibe 3. Das Halteeinrichtung 12 ist mit einem Radehaltearm 13, einer Halteeinrichtungsbasis 14 sowie einem Hebelarm 15 gebildet. Im Bereich der Halteeinrichtungsbasis 14 ist die Radhalteeinrichtung 12 mit dem Radhaltearm 13 mittels einer Schwenkhalterung 16 an einem Rahmenbauteil 17 schwenkbar angeordnet, welches sich im gezeigten Ausführungsbeispiel abschnittsweise oberhalb der Anordnung mit den Schneidscheiben 3, 4 und den Tiefeneinstellrädern 10, 11 erstreckt. Im Bereich der Schwenkhalterung 16 ist eine Schwenkachse ausgebildet, um die der Radehaltearm 13 schwenkbar ist, derart, dass die Relativlage des ersten Tiefeneinstellrads 10 in Bezug auf das Schneidscheibenpaar 2 verändert werden kann, um so unterschiedliche Arbeitstiefen bei der Bodenbearbeitung zur Saatfurchenausbildung einzustellen.

Zum Ausführen des Schwenkens beim Einstellen ist der Hebelarm 15 mit einer Einstelleinrichtung (nicht dargestellt) verbindbar, beispielsweise einer manuellen oder einer hydraulischen Einstelleinrichtung, welche mit entsprechender Kraftwirkung auf den Hebelarm 15 diesen schwenkt und so ein Verschwenken des Radhaltearms 13 um eine im Bereich der Schwenkhalterung 16 ausgebildete Schwenkachse 18 bewirkt.

Der Radhaltearm 13 weist einen ersten Haltearmabschnitt 19 sowie einen zweiten Haltearmabschnitt 20 auf, die bei der gezeigten Ausführungsform mit jeweiligen Teilarmen 19a, 19b; 20a, 20b ausgebildet sind. Die Teilarme 19a, 19b des ersten Haltearmabschnitts 19 sind in einer V-Stellung angeordnet und laufen endseitig des Radhaltearms 13 zusammen. Im Bereich des zweiten Haltearmabschnitts 20 übergreift der Radhaltearm 13 gegenüber einer Lauffläche 21 des ersten Tiefeneinstellrads 10 das erste Tiefeneinstellrad 10. In einem abgewinkelten Abschnitt 22 ist der erste Haltearmabschnitt 19 einstückig an den zweiten Haltearmabschnitt 20 angeformt. Die Teilarme 20a, 20b des zweiten Haltearmabschnitts 20 verlaufen ausgehend von der Halteeinrichtungsbasis 14, an welche sie auf gegenüberliegenden Seiten der Schwenkhalterung 16 einstückig angeformt sind, zum abgewinkelten Abschnitt 22 hin im Wesentlichen parallel zueinander.

Der erste Haltearmabschnitt 19 ist in Bezug auf eine Zwischenraum 23 zwischen der ersten Schneidscheibe 3 und dem ersten Tiefeneinstellrad 10 auf einer gegenüberliegenden Seite des ersten Tiefeneinstellrads 10 außenliegend angeordnet, also auf einer Außenseite des ersten Tiefeneinstellrads 10.

An dem Radhaltearm 13 ist an dem ersten Haltearmabschnitt 19 endseitig eine Achseneinrichtung 24 gebildet, an der das erste Tiefeneinstellrad 10 auf einer Radachse drehbar aufgenommen ist.

Der außenliegende Verlauf des ersten Haltearmabschnitts 19 unterstützt im Betrieb der Bodenbearbeitung eine auf das erste Tiefeneinstellrad 10 wirkende Kraftresultierende zur ersten Schneidscheibe 3 hin, was in Fig. 3 mittels eines Pfeils B schematisch dargestellt ist. Auf diese Weise wird ein Zwischenraum 25 zwischen der ersten Schneidscheibe 3 und dem ersten Tiefeneinstellrad 10 minimiert, was ein möglichst effizientes Abstreifen von möglichen Bodenanhaftungen auf der Oberfläche der ersten Schneidscheibe 3 durch das erste Tiefeneinstellrad 10 unterstützt.

Gemäß Fig. 2 ist zumindest die Halteeinrichtungsbasis 14 der Radhalteeinrichtung 12 in Fahrtrichtung hinter dem ersten Tiefeneinstellrad 10 angeordnet, was ein effizientes Schieben des ersten Tiefeneinstellrads 10 bei der Bodenbearbeitung in Fahrtrichtung unterstützt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung für eine Säreihe einer landwirtschaftlichen Sämaschine, mit
- einer Schneidscheibe (3; 4), welche an einer Scheibenhalteeinrichtung drehbar angeordnet und für eine Bodenbearbeitung zur Saatfurchenausbildung eingerichtet ist; und
- einem Tiefeneinstellrad (10; 11), welches
- an einer Radhalteeinrichtung (12) auf einer Achseneinrichtung drehbar angeordnet ist;
- relativ zur Schneidscheibe (3; 4) verlagerbar ist, derart, dass hierdurch für die Schneidscheibe (3; 4) eine Bodenarbeitstiefe für die Bodenbearbeitung einstellbar ist;
- benachbart zur Schneidscheibe (3; 4) und in Fahrtrichtung dieser gegenüber zurückversetzt angeordnet ist, derart, dass das Tiefeneinstellrad (10; 11) bei der Bodenbearbeitung Boden hinter der Schneidscheibe (3; 4) andrückend ausgebildet ist; und
- in einer Schubstellung angeordnet ist, derart, dass das Tiefeneinstellrad (10; 11) bei der Bodenbearbeitung mittels der Radhalteeinrichtung (12) in Fahrtrichtung geschoben wird;
wobei die Radhalteeinrichtung (12) einen in Bezug auf einen Zwischenraum (25) zwischen der Schneidscheibe (3; 4) und dem Tiefeneinstellrad (10; 11) außenliegenden, das Tiefeneinstellrad (10; 11) haltenden Radhaltearm (13) aufweist, der mit einem auf einer von der Schneidscheibe (3; 4) abgewandten Seite des Tiefeneinstellrads (10; 11) verlaufenden ersten Haltearmabschnitt (19) gebildet ist, an welchem endseitig die Achseneinrichtung (24) angeordnet ist.

2. Anordnung nach Anspruch 1, **dadurch gekennzeichnet, dass** der Radhaltearm (13) einen zweiten Haltearmabschnitt (20) aufweist, der das Tiefeneinstellrad (10; 11) einer Lauffläche des Tiefeneinstellrads (10; 11) gegenüberliegend zumindest abschnittweise übergreift und an den der erste Haltearmabschnitt (19) in einer abgewinkelten Stellung angeformt ist.

3. Anordnung nach Anspruch 2, **dadurch gekennzeichnet, dass** der zweite Haltearmabschnitt (20) an dem ersten Haltearmabschnitt (19) einstückig angeformt ist.

4. Anordnung nach Anspruch 2 oder 3, **dadurch gekennzeichnet, dass** der Radhaltearm (13) aufgrund einer bei der Bodenbearbeitung auf den Radhaltearm (13) wirkenden Kraftresultierenden nach innen zur Schneidscheibe (3; 4) hin schwenkend flexibel verlagerbar ist.

5. Anordnung nach Anspruch 4, **dadurch gekennzeichnet, dass** der erste und der zweite Haltearmabschnitt (19, 20) aufgrund der bei der Bodenbearbeitung auf den Radhaltearm (13) wirkenden Kraftresultierenden die abgewinkelte Stellung flexibel ändernd ausgeführt sind.

6. Anordnung nach mindestens einem der vorangehenden Ansprüche, **dadurch gekennzeichnet, dass** der Radhaltearm (13) mittels einer Schwenkhalterung (16) an einem Rahmenbauteil (17) angeordnet ist, mit der eine Schwenkachse (18) bereitgestellt ist, um welche der Radhaltearm (13) mit dem hieran angeordneten Tiefeneinstellrad (10; 11) zum Einstellen der Bodenarbeitstiefe schwenkbar ist.

7. Anordnung nach Anspruch 6, **dadurch gekennzeichnet, dass** sich das Rahmenbauteil (17) zumindest abschnittsweise oberhalb der Anordnung von Schneidscheibe (3; 4) und Tiefeneinstellrad (10; 11) erstreckt.

8. Anordnung nach Anspruch 6 oder 7, **dadurch gekennzeichnet, dass** dem Radhaltearm (13) eine Einstelleinrichtung zugeordnet ist, welche mit einem am Radhaltearm (13) angeformten Hebelarm (15) verbunden ist, derart, dass der Radhaltearm (13) mittels Betätigen der Einstelleinrichtung um die Schwenkachse (18) schwenkbar ist.

9. Anordnung nach mindestens einem der vorangehenden Ansprüche, **dadurch gekennzeichnet, dass** der erste Haltearmabschnitt (19) zum Ausbilden der Schubstellung für das Tiefeneinstellrad (10; 11) in Bezug auf eine horizontale Bodenoberfläche in einer Spitzwinkel-Stellung angeordnet ist, derart, dass zwischen einer Längsrichtung des ersten Haltearmabschnitts (19) und der horizontalen Bodenoberfläche ein spitzer Winkel ausgebildet ist.

10. Anordnung nach mindestens einem der vorangehenden Ansprüche, **dadurch gekennzeichnet, dass** der Radhaltearm (13) mit voneinander beabstandeten Teilarmen (19a, 19b; 20a, 20b) gebildet ist, die endseitig zur Achseneinrichtung (24) hin zusammenlaufen.

11. Anordnung nach Anspruch 10, **dadurch gekennzeichnet, dass** die Teilarme (20a, 20b) im Bereich des zweiten Haltearmabschnitts (20) einer Parallelstellung entsprechend angeordnet sind und beginnend in einem Übergang zwischen dem zweiten und dem ersten Haltearmabschnitt (19, 20) oder benachbart hierzu zur Achseneinrichtung (24) hin zusammenlaufen.

12. Anordnung nach Anspruch 10 oder 11, soweit auf Anspruch 6 rückbezogen, **dadurch gekennzeichnet, dass** die Teilarme (20a, 20b) auf gegenüberliegenden Seiten der Schwenkhalterung (16) des Radhaltearms (13) angeformt sind.

13. Anordnung nach mindestens einem der vorangehenden Ansprüche, **gekennzeichnet durch**
- eine weitere Schneidscheibe (4; 3), welche an einer weiteren Scheibenhalteeinrichtung drehbar angeordnet und mit der Schneidscheibe (3; 4) ein Schneidscheibenpaar (2) für die Bodenbearbeitung zur Saatfurchenausbildung bildet und
- ein weiteres Tiefeneinstellrad (11; 10), welches der weiteren Schneidscheibe (4; 3) zugeordnet und dem Tiefeneinstellrad (10; 11) entsprechend ausgebildet ist;
wobei eine weitere Radhalteeinrichtung für das weitere Tiefeneinstellrad (11; 10) einen in Bezug auf einen Zwischenraum zwischen der weiteren Schneidscheibe (4; 3) und dem weiteren Tiefeneinstellrad (11; 10) außenliegenden, das weitere Tiefeneinstellrad (11; 10) haltenden weiteren Radhaltearm aufweist, der mit einem auf einer von der weiteren Schneidscheibe (4; 3) abgewandten Seite des weiteren Tiefeneinstellrads (11; 10) verlaufenden ersten Haltearmabschnitt gebildet ist, an welchem endseitig zur drehbaren Aufnahme des weiteren Tiefeneinstellrads (11; 10) eine weitere Achseneinrichtung angeordnet ist.

14. Säreihe für eine Sämaschine, mit einer Anordnung nach mindestens einem der vorangehenden Ansprüche.

15. Landwirtschaftliche Sämaschine, mit einer Säreihe nach Anspruch 14.
